# EUROPEAN PATENT APPLICATION

(11) **EP 2 662 672 A1**
(43) Date of publication of application: **13.11.2013**
(21) Application number: 13167066.3
(22) Date of filing: 08.05.2013
(51) Int. Cl.: G01F 23/296, G01F 23/72

(54) **Level probe**

(30) Priority: 08.05.2012 IT TO20120411
(71) Applicant: Start Italiana SRL, 20030 Bovisio Masciago (MB) (IT)
(72) Inventor: Caligaris, Lorenzo, 20813 Bovisio Masciago (MB) (IT)
(74) Representative: Vitillo, Giuseppe

(57) **Abstract**

A level probe 1 for determining at least one level "h" of at least one fluid "f" contained in a vessel "C".

Probe 1 comprises a rod 3, which extends longitudinally along an axis "k", at least one movable float 4, adapted to slide along an axis parallel to said axis "k"; a probe body 2, secured near one end of said rod 3 and comprising at least one electronic circuit 20 adapted to determine the position of said float 4 along said axis "k".

Said rod 3 comprises at least one cavity 31 in which said at least one float 4 is positioned, so as to be substantially inaccessible from the outside of said rod 3.

## Description

The present invention relates to a level probe. Said level probe, when placed into a vessel, is adapted to monitor, in real time, the level variations of the fluid contained in said vessel.

In particular, said level probe is a magnetostrictive probe which, in order to determine the level of the fluid in said vessel, uses a physical principle called Wiedemann effect.

Level probes are known which comprise a rod extending along a longitudinal axis, on which at least one float can slide adapted to change its position depending on the level of a fluid contained in a vessel or container.

Such probes comprise at least one electronic circuit adapted to determine the position of the float along said rod, for the purpose of determining the level of the fluid contained in the vessel.

Typically such probes are of the magnetostrictive type, and exploit the above-mentioned Wiedemann effect to determine, with low uncertainty and high resolution, the position of the float along said rod.

Normally such probes are equipped with an electronic circuit comprising a processing unit, which electronic circuit is enclosed in a metal casing, normally referred to as probe body or head, arranged at one end of said rod. Said rod is made of non-magnetic material containing a guide made of ferromagnetic material. A permanent magnet is inserted within the float.

Said electronic circuit sends a current pulse into said guide, e.g. a wire. Said pulse interferes with the magnetic field of the permanent magnet, thereby generating a magnetostrictive effect. The torsion of the guide, caused by the magnetostrictive effect, generates a vibration, or sound wave, which propagates in the guide starting from the exact point where the magnet is located near said guide. The vibration travels along said guide at the speed of sound.

Said electronic circuit comprises a receiver adapted to generate an electric pulse as it receives said vibration, or sound wave. By calculating the time elapsed between the transmission of the pulse in the guide and the electric signal generated by said receiver, it is possible to determine the position of the float along the rod of the probe.

In measurement applications for fuel-containing vessels or tanks, such level probes may comprise a float adapted to detect the level of the fuel contained in the vessel and another float adapted to float on water, for detecting the level of the water on the bottom of the vessel.

Such magnetostrictive probes, once they have been placed into a vessel, are normally connected to an external control unit by means of connection cables. Said connection cables transport data to and from the probe, and are also adapted to supply power to the electronic devices included in the probe itself.

Periodically, at regular intervals, the external control unit interrogates the probe and receives data from said probe, for the purpose of accurately monitoring the fluid supply and discharge operations in a vessel. Said probe is also used in order to detect any fluid leakage from said vessel.

In those applications wherein the fluid contained in the vessels is a fuel, said probe is also used in order to detect any anomalous or unauthorized taking or discharge of fuel.

Several methods are known, whether more or less sophisticated, for tampering with such a probe or the external control unit in order to prevent them from detecting level variations, i.e. variations in the quantity of fluid contained in the vessel.

One method consists of blocking the floats into a desired position, thereby preventing them from following the variations in the level of the fluid contained in the vessel.

Such blocking of the floats is accomplished by using mechanical systems that prevent the floats from freely sliding along the rod. In such a situation, the data transmitted by said probe upon inquiry from the external control unit will indicate a constant level over time, even if fluid supply and/or discharge operations have taken place.

A further method of tampering consists of breaking the electric connection between the probe and the control unit, or cutting off the power to the external control unit, which, as aforementioned, supplies power to the probe. In this latter case, no level measurements will take place, and therefore any variations in the quantity of fluid in the vessel will not be recorded as long as the probe receives no power.

The present invention aims at solving the above-mentioned problems by providing a level probe which does not suffer from the aforementioned drawbacks.

One aspect of the present invention relates to a level probe having the features set out in the appended independent claim 1.

Auxiliary features of the probe are set out in the appended dependent claims.

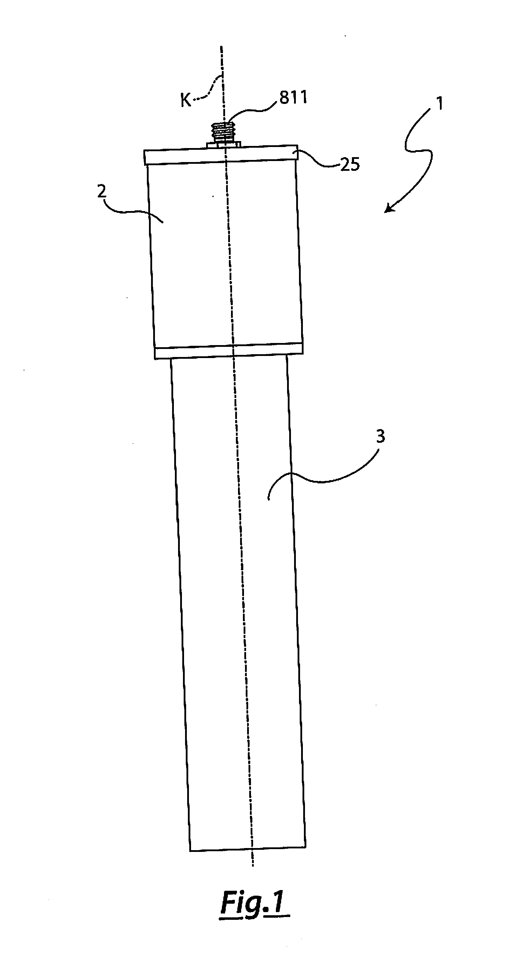

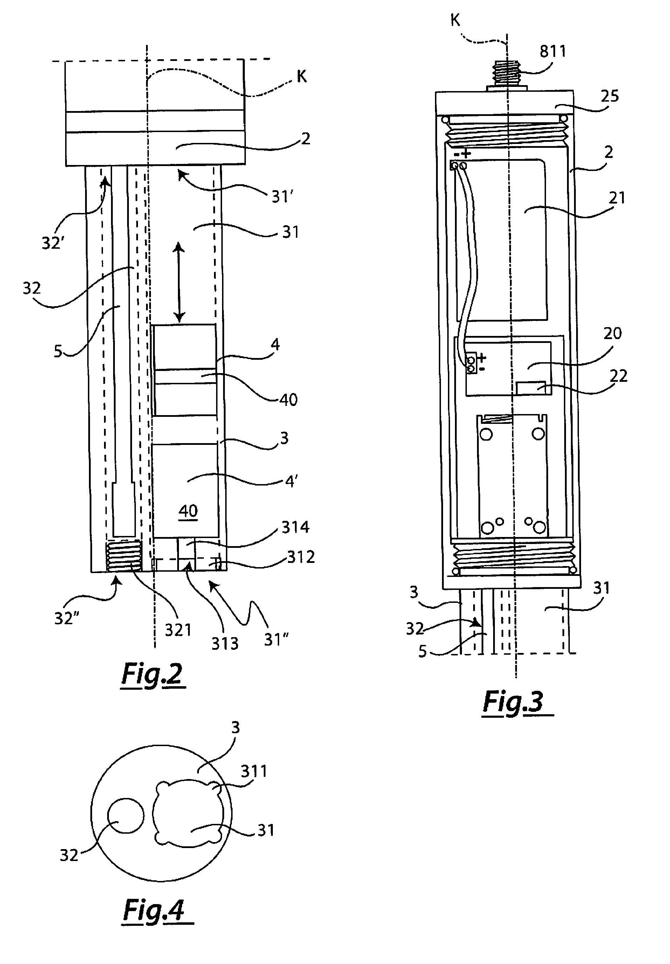

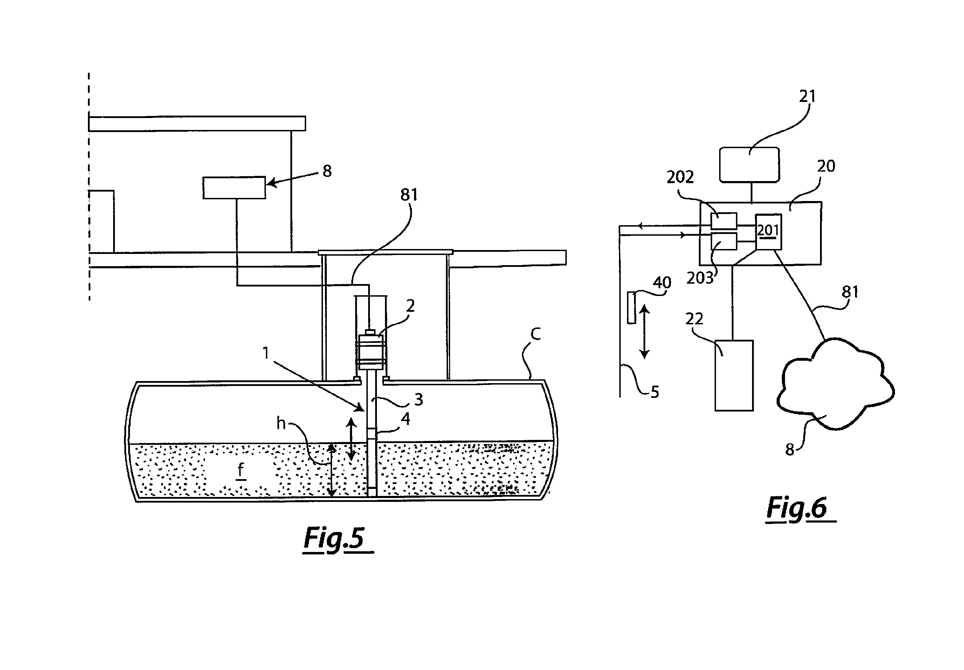

The features and advantages of the present invention will become apparent from the following description of a preferred embodiment of the probe according to the present invention and from the annexed drawings, wherein:
● Figure 1 shows a side view of the probe according to the present invention;
● Figure 2 shows a sectional view of the rod included in the probe of Figure 1;
● Figure 3 shows a sectional view of the probe body included in the probe of Figure 1;
● Figure 4 shows a sectional view of the rod of Figure 2;
● Figure 5 shows a stylized illustration of the probe electrically connected to an external control unit;
● Figure 6 schematically shows the interconnections among the electric devices comprised in the level probe according to the present invention.

With reference to the above-listed drawings, level probe 1 is adapted to determine at least one level "h" of at least one fluid "f" contained in a vessel "C", for the purpose of determining the variation in the quantity of fluid "f" in said vessel "C". Said probe 1 comprises a rod 3, which extends longitudinally along an axis "k", at least one movable float 4, adapted to slide along an axis parallel to said axis "k", and a probe body 2.

Said probe body 2 is rigidly secured near one end of said rod 3, preferably at one end thereof, and comprises at least one electronic circuit 20 adapted to determine the position of said float 4 along the axis on which it can slide.

Said rod 3, which preferably has a circular cross-section, is made of drawn plastic or metal material, which is then subjected to a surface treatment as required by safety regulations for use in inflammable or explosive environments.

Rod 3 comprises at least one first cavity 31, which preferably also extends along an axis parallel to axis "k", inside of which said at least one float 4 is located.

Each one of said at least one cavity 31 is substantially inaccessible from the outside of said rod 3.

For the purposes of the present invention, the cavity substantially inaccessible from the outside of said rod 3 is meant to prevent introducing any foreign bodies into cavity 31; cavity 31, once the probe has been positioned inside vessel "C", is adapted to be flooded by fluid "f" contained in vessel "C", so as to allow said at least one float 4 to slide as level "h", i.e. the quantity, of fluid "f" in vessel "C" changes.

Said cavity 31 also acts as a still tube where the level measurement takes place, thus reducing the measurement uncertainty due to fluid turbulences. In fact, in prior-art level probes such turbulences may cause movements of the floats which are not due to actual level variations, thus increasing the measurement uncertainty.

In the preferred embodiment, said probe 1 is a magnetostrictive probe.

In alternative embodiments (not shown), electronic circuit 20 is adapted to detect the position of said at least one float 4 by exploiting other physical principles such as, for example, the Doppler effect, optical effects, etc. All such embodiments fall within the protection scope of the present invention.

In the preferred embodiment shown in the drawings, probe 1 comprises at least one guide 5, adapted to conduct or guide an electric pulse, preferably a high-frequency one, generated by said circuit 20. Each one of said at least one guide 5 is arranged in a second cavity 32, each parallel to said first cavity 31.

Said at least one float 4 comprises at least one magnet 40, preferably a permanent one, adapted to interact with said guide 5 to generate the magnetostrictive effect, so as to be able to detect the position of float 4 in first cavity 31.

In the present embodiment, as shown in Figure 6, each one of said at least one electronic circuit 20 comprises at least one pulse generator 202, adapted to generate said electric pulse, and at least one receiver 203, adapted to detect the vibration or sound wave generated by the magnetostrictive effect, and at least one data processing unit 201, adapted to process the measurement data in order to determine the position of said at least one float 4. In particular, level measurement "h" will be dependent on the time elapsed between the transmission of the electric pulse by said at least one generator 202 and the reception of the vibration or sound wave by said at least one receiver 203. The operation of electronic circuit 20 for determining the position of said at least one float 4 through the magnetostrictive effect will not be described any further herein, since it is known to those skilled in the art.

Probe body 2 is preferably made of metallic material, appropriately treated to comply with the above-mentioned safety regulations.

Said probe body 2, preferably cylindrical in shape, is rigidly and sealingly secured at its lower end to rod 3, e.g. it is screwed to the latter by means of a sealed thread. At its upper end, said probe body 2 comprises a top closing element 25, e.g. a cover, fitted with fastening means, preferably screws, or said closing element 25 is screwed to probe body 2 by means of sealed threaded portions.

Electronic circuit 20 and the other electronic devices comprised in probe body 2 are held in a predetermined position by a plurality of retaining elements, which also act as dampers for the vibrations caused, for example, by shocks undergone by the probe itself, which might otherwise cause the probe to malfunction or the electronic devices included therein to break.

The first cavity 31 preferably has a substantially circular cross-section, as shown in Figure 4, with a diameter substantially equal to, or preferably greater than, the diameter of said at least one float 4. Furthermore, each first cavity 31 comprises longitudinal grooves 311, preferably four of them, which extend over the whole length of the first cavity 31, and which are adapted to prevent the float from sticking to the walls of cavity 31. In fact, longitudinal grooves 311 allow fluid "f" to flow in cavity 31, while at the same time also allowing the same fluid to release float 4 should it become temporarily stuck.

Preferably, said first cavity 31 extends over the whole length of rod 3, e.g. it is a through hole. Said cavity 31 is delimited at a first end 31', i.e. the upper end, by probe body 2, so that cavity 31 is inaccessible from said first end 31', and at a second end 31", i.e. the lower end, by at least one first plug 312. In order to allow fluid "f" contained in vessel "C" to flood cavity 31, and thus to make it possible to measure the level thereof, said at least one first plug 312 comprises at least one through hole 313.

Said at least one through hole 313 comprises an anti-intrusion device 314, which allows fluid "f" to enter cavity 31 when probe 1 is inserted in vessel "C" while nonetheless preventing any foreign body from getting into the cavity. Said anti-intrusion device 314 is adapted to prevent any foreign body from entering neither when the probe is inside vessel "C" nor when the probe is extracted from vessel "C".

In the preferred embodiment, said anti-intrusion device (not shown) comprises a blocking device and at least one channel. Said blocking device, e.g. a ball, is located within a suitable housing formed in said channel for the purpose of selectively blocking the flow of said fluid in the channel as a function, for example, of its position in said housing. In addition, said channel follows a curvilinear path to prevent any objects from reaching the inside of the first cavity 31.

Said first plug 313 comprises fastening means that do not allow for easy removal thereof.

Said second cavity 32 is preferably circular in shape, and is sized to allow positioning guide 5. The second cavity 32 is a through hole extending throughout the length of rod 3, so that the measurement can be taken, through the magnetostrictive effect, over the whole length of rod 3. Said second cavity 32 is delimited at a first end 32' by probe body 2 and at the second end 32" by a second plug 321.

The second plug 321 is adapted to ensure a sealed closure of said second cavity 32, so as to prevent the same second cavity 32 from being flooded by fluid "f" when probe 1 is in vessel "C".

Preferably, as shown in Figure 2, within cavity 31 there are two floats 4, in particular a first float 4 adapted to float on fluids such as fuels, and a second float 4' adapted to float on water. Normally the second float 4', which is adapted to detect the water surface, is arranged in a lower position in cavity 31, preferably in the proximity of the second end 31".

As can be seen in Figures 3, 5 and 6, said probe 1 is susceptible to be connected to an external control unit 8. Said control unit 8 is preferably external to probe 1 itself and to vessel "C", being preferably located in a place easily accessible to the inspection personnel. Normally said external control unit 8 comprises a device for displaying and storing the data received from the probe.

Said external control unit 8 and said probe 1 are connected by means of at least one communication line 81, preferably consisting of a cable, which carries the data of the level measurement carried out by the probe and the data through which external control unit 8 interrogates said probe and enables it to carry out a measurement.

Said communication line 81 is preferably connected to probe 1 according to the present invention through at least one connector 811, which is preferably located at the top of probe body 2.

Data transmission is preferably serial, e.g. with RS485 protocol.

In alternative embodiments (not shown), said line 81 is a wireless one and the communication medium is air, through the use of electromagnetic waves. In such an embodiment, electronic circuit 20 and external control unit 8 are equipped with radio transmitters that enable them to send out information.

Said probe body 2 comprises at least one electric charge accumulation device 21, preferably a battery, adapted to ensure the power supply to said electronic circuit 20 in the event of an electric blackout, e.g. if line 81 connecting it to said central control unit 8 is interrupted, or if power is removed from external unit 8, so that external control unit 8 cannot interrogate probe 1 at regular intervals.

Said probe body 2 further comprises at least one non-volatile memory medium 22 adapted to store the data processed by said at least one circuit 20, preferably processed by said data processing unit 201, e.g. in chronological order.

If the power supply to the probe is interrupted, e.g. by disconnecting line 81, or if probe 1 is not interrogated by external control unit 8, electronic circuit 20 of probe 1 can detect such events and can set probe 1 to continue measuring the level. In such a situation, electronic circuit 20 will set itself into a low-consumption operating condition for the purpose of preserving the charge accumulated in the electric charge accumulation device 21. For the purposes of the present invention, the term "low-consumption" means that circuit 20 can reduce its own consumption, e.g. by switching off most of the devices included therein, and then restore the power supply only in predetermined conditions, e.g. after a predetermined time period has elapsed.

In the low-consumption operating condition, circuit 20 can still carry out the level measurement, e.g. at the instant when power is restored to all the devices included in circuit 20. After having carried out the level measurement, circuit 20 will return into the low-consumption operating condition. The data obtained from the measurement are stored into a memory location of the non-volatile memory medium 22.

Preferably, circuit 20 supplies power to all the devices included therein at regular time intervals to carry out a level measurement, and the data are suitably stored into non-volatile memory medium 22. Preferably, a measurement will only be stored into medium 22 if the difference between the previous reading and the current reading exceeds a preset value "Δ", e.g. 1 mm.

Said low-consumption operating condition is maintained until the charge contained in accumulation device 21 is exhausted or the power supply to the probe is restored, e.g. via line 81, and/or there is a data exchange between external control unit 8 and probe 1.

When the communication between probe 1 and external control unit 8 is restored, the data contained in memory medium 22 are sent to external unit 8 in order to reconstruct the trend of the level of fluid "f" in vessel "C" in the period when there was no communication between probe 1 and external unit 8.

Preferably, the storage capacity of memory medium 22 is such that a number of readings can be stored which is at least equal to the quantity of measurements that circuit 20 can carry out with a fully charged accumulation device 21, so as to avoid losing data or overwriting data into memory locations already occupied. In addition, even in the absence of power memory medium 21 will still be able to keep the stored data, thus avoiding any data loss.

Preferably, electronic circuit 20 comprises a recharging device (not shown), which is adapted to recharge accumulation device 21 when there is a power signal to probe 1, e.g. in the presence of connection line 81 between probe 1 and external control unit 8.

By including a charge accumulation device 21 and a non-volatile memory medium 22, it is possible to carry out a process for detecting any actions aimed at adulterating the contents of fluid "f" in a vessel "C".

Said process comprises the following steps:
● inserting a probe 1 into vessel "C";
● taking an automatic measurement of the level of fluid "f" inside vessel "C";
● automatically verifying the connection between said probe 1 and an external control unit 8;
● if the connection between probe 1 and external unit 8 is correct, repeating the previous step of taking a level measurement at a time interval "t1";
● if there is no connection between said external unit 8 and probe 1, repeating the previous step of taking a level measurement at a time interval "t2" longer than "t1";

If there is no connection, the following steps are also carried out:
● reducing the energy consumption of measurement circuit 20;
● storing the measurement data, appropriately processed, into a non-volatile memory medium.

During the step of inserting probe 1 into the vessel, said probe 1 is so arranged that longitudinal axis "k" of rod 3 is perpendicular to the surface of fluid "f" contained in vessel "C".

During the step of taking the level measurement, external control unit 8 interrogates probe 1 and enables it to carry out a level measurement. Circuit 20 processes the data obtained from the measurement and transmits them to external unit 8.

Subsequently, prior to taking a new measurement, a step of verifying the electric connection is carried out. Said step is executed automatically by circuit 20, which verifies, e.g. by means of an internal counter, if external control unit 8 is interrogating probe 1 at known regular intervals.

This verification step is useful to determine if there is a communication line 81 between external unit 8 and probe 1, through which the level readings can be sent.

Electronic circuit 20 can also detect the absence of power supply to probe 1.

If the connection between the probe and the central control unit is correct and power is present, the probe will repeat the level measurements at a time interval "t1" defined, for example, by external control unit 8. In fact, said time interval "t1" may coincide with the time interval at which external control unit 8 interrogates probe 1.

On the contrary, if there is no connection between said unit 8 and probe 1 or no power is supplied to the probe, the latter will set itself to keep taking measurements by using the charge of accumulation device 21. It will also set itself to repeat the level measurements at a time interval "t2" longer than "t1".

The longer time between two consecutive measurements will allow to limit the energy consumption of probe 1, which will only be powered by charge accumulation device 21.

In such a situation, moreover, circuit 20 will reduce its energy consumption in order to preserve as much as possible the charge in accumulation device 21. Preferably, printed circuit board 20 will turn off the power to most electronic devices during the pause between two level measurements.

At this stage, the processed measurement data will also be stored into medium 22.

As aforementioned, a reading will only be stored into medium 22 if the difference between the previous reading and the current reading exceeds a preset value "Δ", e.g. 1 mm.

These operations will be repeated until power is restored to probe 1 and a communication line 81 between probe 1 and external unit 8 is operational again.

When said line 81 is operational again, a step of transmitting to external unit 8 the data stored by said probe while there was no communication will be carried out.

When all the data stored have been correctly transferred to external unit 8, the contents of the memory locations of medium 22 can be deleted, so that they can be reused right away for saving new measurement data, in the event that line 81 connecting the probe to external unit 8 is lost or that the same external unit no longer interrogates the probe for taking measurements.

In an alternative embodiment (not shown), in order to reduce the measurement uncertainty or possible errors due to the effect of a float 4 sticking to the inner walls of cavity 31, it is conceivable to use a rod comprising a plurality of cavities 31 parallel to one another and preferably equidistant, such that simultaneous level measurements can be taken on multiple floats 4.

The use of cavity 31, in which said at least one float 4 can slide, allows to prevent any adulteration of the above-mentioned measurements; for example, it prevents blocking said at least one float 4 in order to alter the level measurements.

Furthermore, by combining the use of cavity 31 with the use of a non-volatile memory medium 22 and a charge accumulation device 21, it is possible to prevent the most common attempts to adulterate level measurements inside a vessel or container "C".

### REFERENCE NUMERALS:

- Level probe: 1
- Probe body: 2
- Electronic circuit: 20
- Data processing unit: 201
- Pulse generator: 202
- Receiver: 203
- Charge accumulation device: 21
- Non-volatile memory medium: 22
- Upper closing element: 25
- Rod: 3
- First cavity: 31
- First end: 31'
- Second end: 31"
- Longitudinal grooves: 311
- First plug: 312
- Through hole: 313
- Second cavity: 32
- First end: 32'
- Second end: 32"
- Second plug: 321
- Float: 4
- Magnet: 40
- Guide: 5
- Central control unit: 8
- Line: 81
- Connector: 811
- First and second time interval: t1
- Vessel: C
- Fluid: f
- Level: h
- Axis: k

## Claims

1. Level probe (1) for determining at least one level (h) of at least one fluid (f) contained in a vessel (C);
said probe (1) comprises:
● a rod (3) extending longitudinally along an axis (k),
● at least one movable float (4), for sliding along an axis parallel to said axis (k);
● a probe body (2), secured near one end of said rod (3) and comprising at least one electronic circuit (20) for determining the position of said float (4) along said axis (k);
said probe (1) is **characterized in that** said rod (3) comprises at least one cavity (31) in which said at least one float (4) is positioned, so as to be substantially inaccessible from the outside of said rod (3).

2. Probe according to claim 1, wherein said probe (1) is a magnetostrictive probe comprising:
● at least one guide (5), for guiding a high-frequency electric pulse generated by said circuit (20),
● at least one second cavity (32), parallel to said first cavity (31), in which a guide (5) is placed,
● at least one magnet (40) comprised in each one of said at least one float (4).

3. Probe according to claim 1, wherein said cavity (31) has a substantially circular section with a diameter substantially equivalent to the diameter of said at least one float (4), and comprises longitudinal grooves (311).

4. Probe according to claim 1, wherein said at least one first cavity (31) is delimited at a lower end (31") by at least one first plug (312) comprising at least one through hole (313) allowing the cavity (31) to be flooded by the fluid (f) contained in the vessel (C).

5. Probe according to claim 4, wherein said at least one through hole (313) comprises at least one anti-intrusion device (314), which allows the fluid (f) to enter the cavity (31) while preventing any foreign body from getting into said cavity.

6. Probe according to claim 1, wherein said probe body (2) comprises:
- at least one electric charge accumulation device (21), for ensuring the power supply to said at least one electronic circuit (20);
- at least one non-volatile memory medium (22), for storing the data processed by said at least one electronic circuit (20).

7. Probe according to claim 2, wherein each one of said at least one electronic circuit (20) comprises at least one pulse generator (202), for generating an electric pulse, and at least one receiver (203), for detecting the vibration or acoustic wave generated by the magnetostrictive effect, and at least one data processing unit 201, for processing the data obtained from the measurement in order to determine the position of said at least one float (4).

8. Probe according to claim 1 or 6, wherein said probe (1) is susceptible to be connected to an external control unit (8) through at least one communication line (81).

9. Probe according to claim 8, wherein said at least one communication line (81) is connected to the probe (1) through at least one connector (811).

10. Probe according to claim 1 or 9, wherein said at least one electronic circuit (20) can be placed into a low-consumption operating condition in the event that the power supply to the probe (1) is interrupted or in the event that an external control unit (8) does not inquire the probe (1).
